(19) Europäisches Patentamt
European Patent Office
Office européen des brevets

(11) **EP 4 302 978 A1**

(12) **EUROPEAN PATENT APPLICATION**

(43) Date of publication:
**10.01.2024 Bulletin 2024/02**

(21) Application number: **22306010.4**

(22) Date of filing: **06.07.2022**

(51) International Patent Classification (IPC):
**B29D 11/00** (2006.01)    **B29C 64/112** (2017.01)
**B33Y 10/00** (2015.01)    **B33Y 30/00** (2015.01)

(52) Cooperative Patent Classification (CPC):
**B29D 11/00317; B29D 11/00009; B29D 11/00432;
B29D 11/00442; B33Y 10/00; B33Y 30/00;**
B33Y 80/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Essilor International
94220 Charenton-Le-Pont (FR)**

(72) Inventors:
• **LECOMPERE, Maxime
94700 MAISONS-ALFORT (FR)**

• **BEN CHEIKH, Ilhem
94000 CRETEIL (FR)**
• **LEITE, Pierre
91650 BREUILLET (FR)**
• **BARANTON, Konogan
77450 MONTRY (FR)**

(74) Representative: **Korakis-Ménager, Sophie
Essilor International
Propriété Intellectuelle
147, rue de Paris
94220 Charenton-le-Pont (FR)**

(54) **METHOD FOR ADDITIVELY MANUFACTURING AN OPHTHALMIC LENS AND MANUFACTURING SYSTEM**

(57)    A method for additively manufacturing an ophthalmic lens. The manufacturing method comprises, creating at least one disrupted part, the at least one disrupted part having a disrupted refractive index variation. The at least one disrupted part is smaller than 1 mm$^3$ for example smaller than 1/12 mm$^3$. The at least one disrupted part is located in a depth of the ophthalmic lens or on a surface of the ophthalmic lens.

[Fig. 3]

## Description

### Technical field

Various aspects of this disclosure generally relate to the field of methods for additively manufacturing an ophthalmic lens and the field of manufacturing systems.

### Background information and prior art

Myopia may have severe long term consequences on the eye that may even result in blindness. It appears that for most subjects, in particular for children, the myopia condition of the eye tends to increase with time.

It is therefore crucial to limit or stop the progression of myopia, as the severity of its consequences is linked to the severity of the final myopia that is reached by a subject.

To limit or stop the progression of myopia one can add lenslets, scattering points or scattering areas on the surface of one of the sides of the ophthalmic lenses worn by the subject.

To realize ophthalmic lenses, one can use additive manufacturing. However, the actual additive manufacturing methods and manufacturing systems present limitations, especially when the ophthalmic lenses are designed to limit the progression of myopia.

Therefore, there is a need for a method for additively manufacturing an ophthalmic lens and a manufacturing system that do not have these limitations.

### Summary

The following presents a simplified summary in order to provide a basic understanding of various aspects of this disclosure. This summary is not an extensive overview of all contemplated aspects and is intended to neither identify key or critical elements of all aspects nor delineate the scope of any or all aspects. The sole purpose is to present some concepts of one or more aspects in a simplified form as a prelude to the more detailed description that is presented later.

One aspect of this disclosure is a method for additively manufacturing an ophthalmic lens. The manufacturing method comprises, creating at least one disrupted part, the at least one disrupted part having a disrupted refractive index variation. The at least one disrupted part is smaller than 1 mm$^3$ for example smaller than 1/12 mm$^3$. The at least one disrupted part is located in a depth of the ophthalmic lens or on a surface of the ophthalmic lens.

Another aspect of this disclosure is a manufacturing system configured to the additive manufacturing of an ophthalmic lens. The manufacturing system is configured to create at least one disrupted part, the at least one disrupted part having a disrupted refractive index variation. The at least one disrupted part is smaller than 1 mm$^3$ for example smaller than 1/12 mm$^3$. The at least one disrupted part is located in a depth of the ophthalmic lens or on a surface of the ophthalmic lens.

### Description of the drawings

For a more complete understanding of the description provided herein and the advantages thereof, reference is now made to the brief descriptions below, taken in connection with the accompanying drawings and detailed description, wherein like reference numerals represent like parts.

Figure 1 represents a manufacturing system adapted to manufacture an ophthalmic lens by way of a DLP-SLA process.

Figure 2 represents a manufacturing system adapted to manufacture an ophthalmic lens by polymer jetting.

Figure 3 represents a manufacturing method.

Figure 4 represents an example of an ophthalmic lens.

Figure 5 represents a lighting energy provided by a first image and by a second image used to cure the curable material.

Figure 6-a represents a first example of the first image.

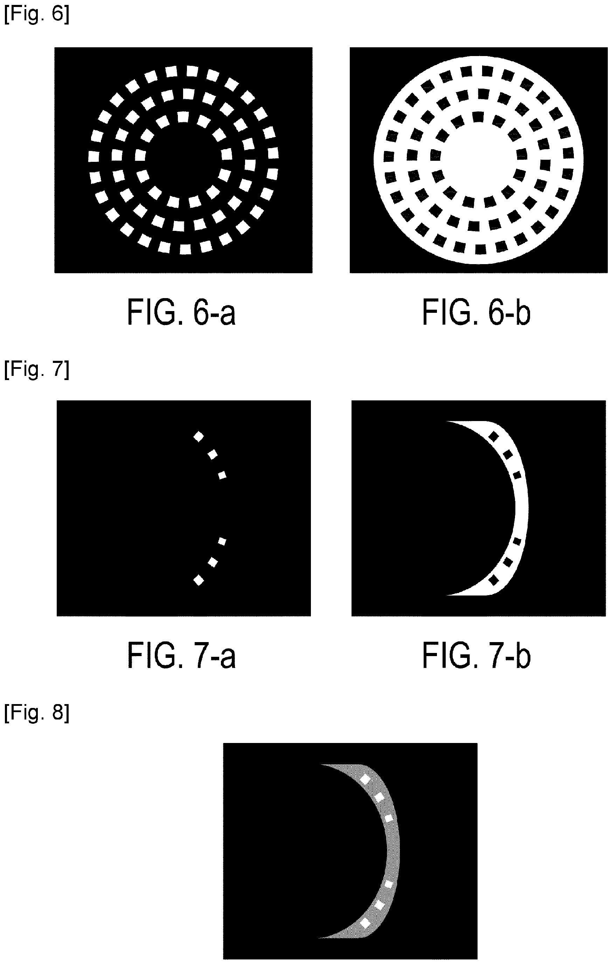

Figure 6-b represents a first example of the second image.

Figure 7-a represents a second example of the first image.

Figure 7-b represents a second example of the second image.

Figure 8 represents an example of a grayscale image usable to cure the curable material.

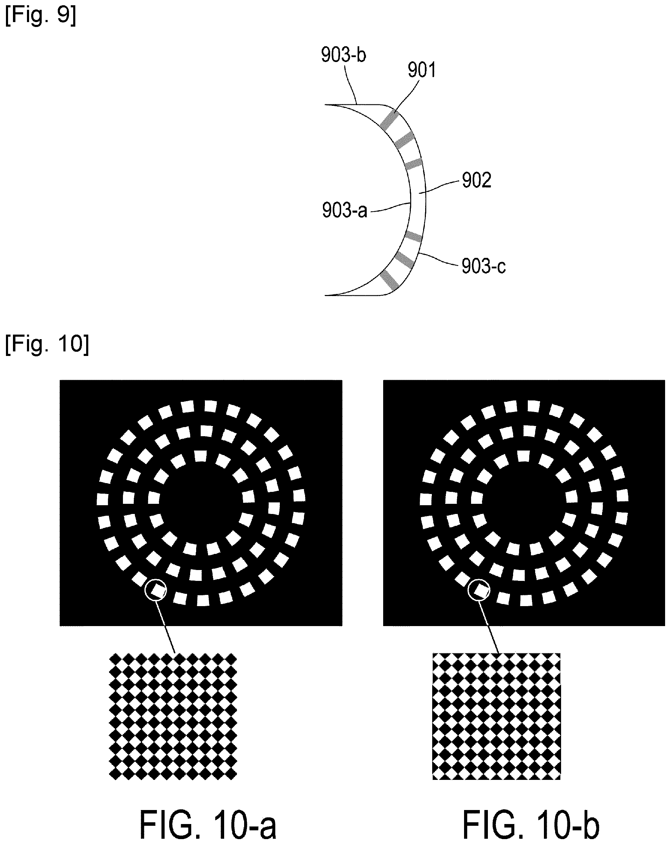

Figure 9 represents a cross section of the ophthalmic lens.

Figures 10-a and 10-b represent third examples of the first image.

## Detailed description of embodiments

The detailed description set forth below in connection with the appended drawings is intended as a description of various possible embodiments and is not intended to represent the only embodiments in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form in order to avoid obscuring such concepts.

This description applies more particularly to the manufacturing of an ophthalmic lens. The ophthalmic lens can be suitable for being mounted in an eyeglass frame. The ophthalmic lens is potentially manufactured already to a shape adapted for being mounted in the eyeglass frame, or needing a further edging step in order to reach the required shape.

The expression "additive manufacturing technology" refers to a manufacturing technology as defined in the international standard ASTM 2792-12, which mentions a process of joining materials to make objects from 3D model data, usually layer upon layer, as opposed to subtractive manufacturing methodologies, such as traditional machining. Solid objects are thus manufactured by juxtaposing volume elements (mainly layers of voxels, or drops, or droplets, or, in some cases even blocks of matter). In the case of the present description, the ophthalmic lens is manufactured volume element by volume element, also known as voxel, preferably layer by layer.

The additive manufacturing technology may be in practice stereolithography (SLA), digital light processing stereolithography (DLP-SLA) or polymer jetting or other. Polymer jetting is also known as inkjet method or printing method. Additive manufacturing technologies comprise processes which create objects, according to a predetermined arrangement that can be defined in a CAD (Computer Aided Design) file.

Stereolithography (SLA) and digital light processing stereolithography (DLP-SLA) both work by focusing a light, mostly an ultraviolet light, onto a container of photopolymer liquid resin in order to form solid layers that stack up to create a solid object. Regarding stereolithography (SLA), the liquid resin receives a selective exposure to light by a laser beam scanning the print area. Digital light processing stereolithography (DLP-SLA) uses a digital projector engine to project images of each layer across the entire surface of the resin. The successive images projected of each layer are composed of sensibly square pixels, resulting in a layer formed from small rectangular bricks called voxels (volume defined by the square pixel or laser width for stereolithography and the thickness of the layer).

As an alternative, the pixels may have other shapes, such as being hexagonal, rhombus or elongated depending on the technology used.

A polymer jetting technology uses a print head for example an inkjet print head to jet, drop or deposit droplets of the curable material onto a support or build platform. The curable material is cured by a light source, such as an infrared source or an ultraviolet source, and solidified in order to build layers forming the final ophthalmic lens.

The curable material is for example a photopolymer resin and the ophthalmic lens is cured by a photopolymerization process. As an example, the photopolymer resin comprises (meth)acrylate monomers with a radical photo initiator.

In practice, the photopolymerization process can be often characterized by a conversion rate $Cv$ (or polymerization rate) of the curable material. The conversion rate $Cv$ is linked to the physical state of matter of the curable material. Before being irradiated by the curable energy, mostly irradiation by light, the curable material is liquid.

At the beginning of the curing, the conversion rate $Cv$ is considered close to 0, notwithstanding a slight polymerization due to aging of the curable material. Under the irradiation of the curable material by the curable surface energy, the curable material polymerizes and switches progressively from a liquid state to a solid state. The curable material is going through multiple states, especially an intermediate state, called "gel state", whose corresponding conversion rate $Cv$ depends on the curable material.

The intermediate state corresponds to a matter state which is neither liquid nor solid but between them, in particular, not solid enough according to the method according to the methodology of Jacobs (Paul F. Jacobs, Fundamentals of stereolithography in International Solid Freeform Fabrication Symposium, 1992), but with monomers having started to polymerize with each other, starting to form parts of a polymer network. The conversion rate $Cv$ of the intermediate state may for example be between 20 % and 80 % for some acrylate monomers, or higher than 10% and/or lower than 67% for some others. The curable material is considered to be in a solid state for a conversion rate $Cv$ generally higher than 80 %. For some acrylate monomers, the curable material is considered to be in a solid state for a conversion rate $Cv$ higher than 67%. Depending on the material, the curable material is considered to be in a solid state for conversion rates higher than a critical conversion rate which may be empirically determined between about 60% to about 80%.

The conversion rates characterizing the intermediate state and the solid state depend on a curing surface energy $E$ (or light dose) derived from the light source, on the absorption properties of the curable material, and on the efficiency of the initiator to polymerize the curable material.

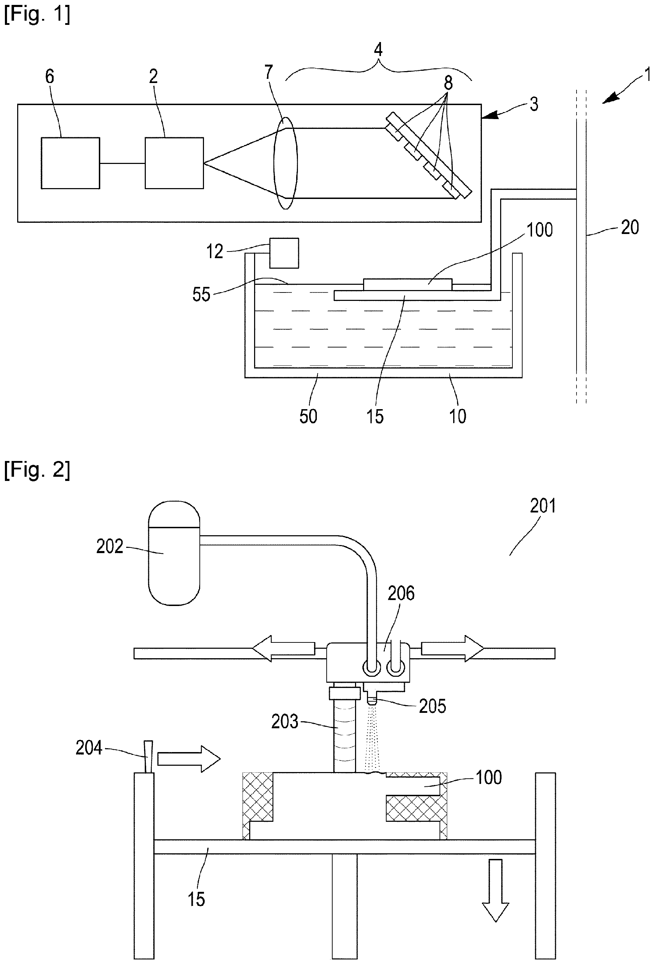

Figure 1 represents a manufacturing system 1 adapted to manufacture an ophthalmic lens by way of a DLP-SLA process. The manufacturing system comprises a forming unit 3, a container 10, a support 15 and shifting means 20.

The forming unit 3 comprises an energy source 2, an optical system 4, and a computer element 6. The forming unit 3 is adapted to implement a method for manufacturing the ophthalmic lens 100 when the instructions are executed. In practice, the computer element 6 includes a processor and a memory (not represented). The processor is adapted to execute the instructions to manufacture the ophthalmic lens 100 and the memory stores these instructions. As an example, the computer element 6 is programmed to generate instructions regarding the magnitude of the curing surface energy for each successive step of providing a curing surface energy, and regarding image patterns (or light patterns) that will be projected on the surface 55 of the curable material 50. These instructions are for example transmitted to the energy source 2 and/or to the optical system 4.

Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, Tensor Processing Unit (TPU) and other suitable hardware configured to perform the various functionality described throughout this disclosure.

The memory is computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by the processor.

The energy source 2 is suitable for irradiating the surface 55 of the curable material 50 with a curing surface energy. The energy source 2 provides a light beam, for example, an ultraviolet light beam, directed to the curable material 50 by the optical system 4.

The optical system 4 is adapted to project the light coming from the energy source 2 onto the surface 55 of the curable material 50. The optical system 4 comprises a plurality of micro-mirrors 8 arranged into a grid format. The plurality of micro-mirrors 8 is also called Digital Micromirror Device (DMD). The micromirrors 8 are separated from each other by an interspace (as in practice, it is not possible to have a perfect junction between two adjacent micro-mirrors). A micro-mirror 8 is for example in a sensibly square-shape, with a size of, for example 8 $\mu$m by 8 $\mu$m. The interspace is between 1 and 10 $\mu$m, for example around 2.8 $\mu$m, for a pitch between micro-mirrors of about 10.8 $\mu$m. Once projected onto the surface 55 of the curable material 50, the micro-mirrors 8 form projected pixels with a given pitch, comprising a direct projection of the micro-mirrors and of the interspace. For example the pitch may be of about 40 $\mu$m by 40 $\mu$m, with about 30 $\mu$m by 30 $\mu$m corresponding to a projection of the micro-mirrors, separated by an interspace of about 10 $\mu$m.

It is to be noted that other alternative combinations of energy source and optical system exist. For example, the formation of the image pattern may be generated entirely by the energy source, using LED or OLED (Organic Light-Emitting Diode) screen, and the optical system only provides positioning and focusing effects. Alternatively, the energy source may provide energy in a continuous or regular burst manner, and the optical system generates the image pattern on top of positioning and focusing effect. This is generally the case with MEMS (Microelectromechanical Systems) and LCD systems. Further, the size of the micro-mirrors or LCD or LED pixels or of the projected pixels may vary from the current example.

As visible in figure 1, the optical system 4 comprises a projection system 7 adapted to direct the ultraviolet beam from the energy source 2 to the plurality of micro-mirrors 8.

The curable material 50 is in the container 10 in a liquid state. Once polymerized, the curable material 50 forms the ophthalmic lens 100 which is born by the support 15. In practice, the support 15 is partly immersed in the container 10 of curable material 50 such that a portion of the liquid curable material 50 is on the top of the support 15. The light beam provided by the energy source 2 is thus projected on this portion of the curable material 50. When this portion is polymerized, the part of the ophthalmic lens 100 which is formed is thus on the support 15.

The figure 2 represents a manufacturing system 201 adapted to manufacture the ophthalmic lens 100 by way of polymer jetting. The manufacturing system 201 comprises:

- the support 15 on which the ophthalmic lens 100 is created, the support 15 is also configured to move down during the manufacturing of the ophthalmic lens 100. The support 15 can be sensibly flat and configured to be in a horizontal position during the manufacturing method.
- a tank 202 configured to contain curable material,
- the print head 206 comprises a nozzle 205 connected to the tank 202 and configured to jet, drop or deposit the curable material coming from the tank 202. The print head 206 is configured to move along a plane parallel to the support 15,
- a curing unit 203 configured to cure the curable material previously jetted. The curing unit can be an imaging device (like DLP previously presented) or a non-imaging device (for example a LED Light-Emitting Diode or an UV light).

The set comprising the tank 202 and the print head 206 forms a dispensing unit.

In some embodiments, the support 15 is fixed, and the print head 206 can move in three dimensions.

In some embodiments, the print head 206 is fixed, and the support 15 can move in three dimensions.

Optionally the manufacturing system 201 can comprise a leveling blade 204 used to level the layer of curable material jetted by the nozzle 202.

During the manufacturing method a layer of curable material is jet, using the nozzle 202. This layer rests on a previously manufactured layer of curable material 50 or directly on the support 15. The curable material 50 is cured using the curing unit 203. Once the material is cured the support 15 is lowered and a new layer can be manufactured.

The manufacturing system of the figure 2 can also comprise the computer element (not represented). As previously the computer element includes a processor and a memory. The processor is adapted to execute the instructions to manufacture the ophthalmic lens 100 and the memory stores these instructions. As an example, the computer element 6 is programmed to generate instructions regarding an amount of curable material to drop on each part of a given layer. To do this the computer element 6 commands the print head 206 and/or the support 15 to move it in each position on which curable material must be dropped and the nozzle 205 to drop a predetermined amount of curable material on the different positions. The computer element 6 commands also the curing unit 203 to realize the curing of the layer.

**The** manufacturing system of the figure 1 and the figure 2, more precisely the computer element 6, are configured to realize a manufacturing method. This manufacturing method allows the manufacturing of the ophthalmic lens.

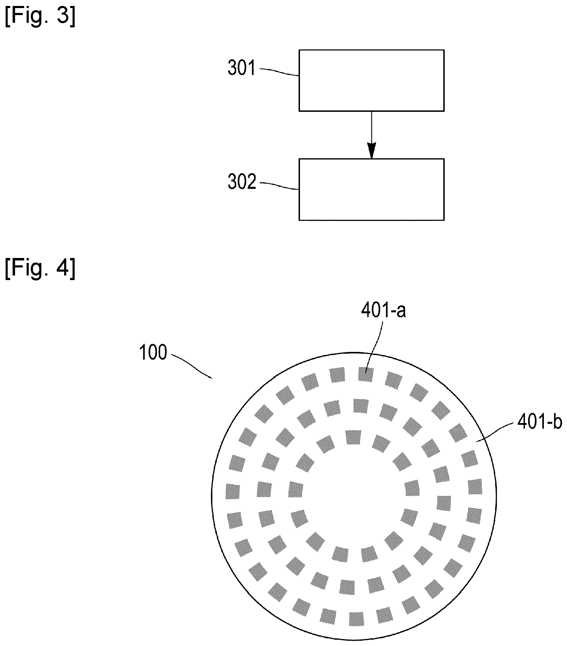

As represented in figure 3, the manufacturing method comprises:

- a step of creating 301 a plurality of disrupted parts, the disrupted parts having a disrupted refractive index variation.

The disrupted parts comprise a plurality of interfaces. Each of the disrupted parts is smaller than 1 mm$^3$ for example smaller than 1/12 mm$^3$. The disrupted parts are located in a depth of the ophthalmic lens or on a surface of the ophthalmic lens.

The disrupted parts are located in the depth of the ophthalmic lens when they are inside the ophthalmic lens or when they are flush with the surface of the ophthalmic lens.

The manufacturing method of the figure 3 also comprises:

- a step of creating 302 one or more other parts, adjacent to the disrupted parts and/or at least partially surrounding the disrupted parts.

The other parts, surrounding the disrupted parts, are clear, and present an almost homogeneous and constant refractive index. An almost homogeneous and constant refractive index is a refractive index that does not impact the optical quality of the part of the ophthalmic lens having this almost homogeneous and constant refractive index.

The disrupted parts and the other parts form the ophthalmic lens.

The variation of the refractive index is for example between 0.0001 et 0.001.

The step of creating 301 the disrupted parts and the step of creating 302 the other parts can be realized simultaneously or sequentially.

The manufacturing method of figure 3 is implementable using the manufacturing system of figure 1 or the manufacturing system of figure 2.

Using this method, the whole ophthalmic lens, including the disrupted parts, is created using a single method. Therefore, this method is less complex than other manufacturing methods because it avoids adding several complicated steps. The method of this description also limits industrial problems (e.g., cost, accuracy consistency, etc.).

Having the disrupted parts located in the depth of the ophthalmic lens allows these parts to be not exposed to damage and improves the aestheticism of the ophthalmic lens.

When the ophthalmic lens is varnished after the manufacturing, this localization of the disrupted parts also prevents the creation of a meniscus with a negative curvature at the contour of the disrupted parts, which can happen when the disrupted parts are located on the surface of the ophthalmic lens.

The disrupted parts scatter the light and the other parts do not or at least very little scatter the light. When a layer is created and cured following conventional curing strategies (for example without sub-polymerisation as explained after) an optical defect (a part of micro-optical element) is created between the two cured layers.

In other words, the manufacturing method of this disclosure provides light scattering in a controlled way, using the same curable material for the disrupted parts of the lens and the other parts of the lens surrounding the disrupted parts.

Using this method, one can create inhomogeneities in the substrate to deform the propagating wavefront and scattered light.

According to the following publications, disrupted refractive index variation (non-homogenous, neither linear gradient) will distort the wavefront in a chaotic manner, resulting in scattering of light. The three references below are used in the modelling of light through inhomogeneous refractive index material:

- 1998 (Tunick) Calculating the Microstructure of Atmospheric Optical Turbulence https://apps.dtic.mil/sti/pdfs/ADA358511.pdf
- 2007 (Cheon Muschinski) Closed-form approximations for the angle-of-arrival variance of plane and spherical waves propagating through homogeneous and isotropic turbulence.
- 2018 (Voelz Xiao) Computer simulations of optical turbulence in the weak- and strong scattering regime angle-of-arrival fluctuations obtained from ray optics and wave optics https://doi.org/10.1117/1.OE.57.10.104102

The figure 4 represents the ophthalmic 100 lens manufacturing using the method of the figure 3. The ophthalmic lens 100 is formed of the disrupted parts 401-a and the other parts 401-b surrounding the disrupted parts 401-a. Each of the disrupted parts 401-a are smaller than 1 mm$^3$ for example smaller than 1/12 mm$^3$. The disrupted parts 401-a are located in a depth of the ophthalmic lens 100. The 3 dimensions (width, length and height) of the disrupted parts 401-a are for example between 1 mm and 1/4 mm.

The method of figure 3 can comprise a step of manufacturing a plurality of layers of a curable material to create the at least one disrupted part 401-a. Different interfaces will be located in between each of the layers. The number of interfaces will depend on the number of layers and will equal the number of layers minus 1. The number of layers on each of the disrupted parts will depend on the thickness of the layers and the thickness of the disrupted part.

The layers of the plurality of layers can be nearly perpendicular or parallel to an axis normal to a front face of the ophthalmic lens 100 at a top point of the front face, for example an optical axis of the ophthalmic lens 100. In other words, the layers have an orientation that is parallel or perpendicular to the general orientation of the front or back optical faces of the ophthalmic lens 100, or an orientation that is angularly between the parallel and perpendicular orientations. When the layers are perpendicular to the axis, the ophthalmic lens is built vertically which is advantageous because the support 15 of the manufacturing system is in contact with the edge of the ophthalmic lens 100. Having an angle between 30° and 45° allows the manufacturing method to be quicker by allowing both sides of the ophthalmic lens 100 to face the bottom or the top of the manufacturing system.

In a first example of the manufacturing method, the step of manufacturing the plurality of layers comprises:

- a step of curing a first area of a layer of the plurality of layers with a first image having a first contrast level, the first area being comprised in one of the disrupted part 401-a and

- a step of curing a second area of the layer with a second image having a second contrast level, the second area being different from the first area,

the first contrast level being higher than a predetermined sharp threshold and the second contrast level being lower than a predetermined blurring threshold.

The second area is part of the other part 401-b surrounding the disrupted parts 401-a. Therefore the second area is not included in one of the disrupted parts 401-a.

The first image and the second image can form a global image. This global image is used to cure in a single curing step the first area and the second area.

The first image having the first contrast level higher than the predetermined sharp threshold produces the first part of the layer having a higher variation of refractive index; while the second image having the second contrast level lower than the predetermined blurring threshold produces the second part of the same layer having a lower variation of refractive index.

Both the first and second images are generated using a DMD (Digital Micromirrors Device), for generating a desired shape light flux for irradiating the curable material. In the process of using DMD for light-curing the resin, in a projected region of the light-curable resin, an intensity of the projected light in a portion corresponding to an area of the micromirror itself is different from that in a portion corresponding to an area between adjacent micromirrors. Due to this, there is a subtle difference in a state of the light-curable resin between these two portions, and a periodical refractive index variation corresponding to two-dimensional array of the micromirrors is generated in the cured layer of the light-curable resin. The first image is for example produced directly using the DMD. In this first image the high contrast level is obtained because of the difference of intensities of the light projected by the area of each of the micromirrors and the light projected by the area between adjacent micromirrors. To obtain the second image having a contrast level lower than the first image, the second image is passed through a diffusion element. To obtain the second image having a contrast level lower than the first image, the optical system 4 can also be defocused while displaying the second image.

In an embodiment the images are monochrome images, for example black and white images. The energy level of the images can be equal or above the solid energy threshold described in the following part of this description.

For the other part 401-b surrounding the disrupted parts 401-a, the use of the second image having a contrast level lower than the one of the first image is also called, blurring. This blurring is used to obtain the constant homogeneous refractive index of this surrounding part. The blurring allows the projection of an almost constant intensity of the light on the curable material. More precisely the intensities of the light projected by the area of each of the micromirrors and the light projected by the area between adjacent micromirrors will be almost equal or at least closer than when not using the blurring. When the blurred image is used, the curing will be almost identical for the whole part cured by this blurring image. The cured material will have a constant homogeneous refractive index.

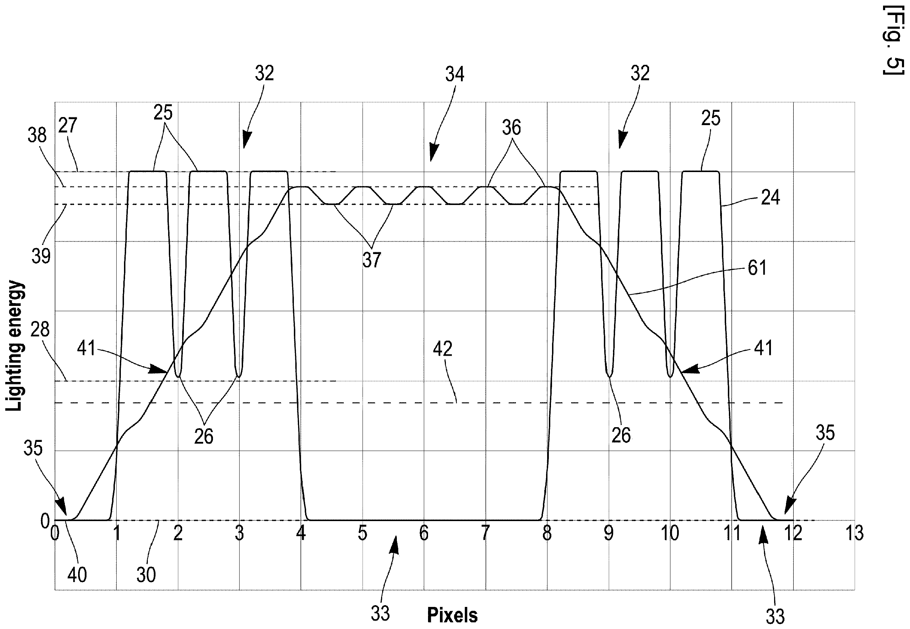

Figure 5 is a graph that schematically shows the lighting energy provided by the first image and by the second image.

The lighting energy is here defined as a surface dosage of light energy that may be expressed in $mJ/mm^2$.

The lighting energy provided by the first image is represented by curve 24 and the lighting energy provided by the second image is represented by curve 61.

Curve 24 has high region 32 corresponding to where the first image is projected and low regions 33 corresponding to where the first image is not projected.

The high region 32 comprises a succession of plateaus 25 and valleys 26 which are respectively the effect of the micromirrors of the unit 16 and of the space between these micromirrors.

The plateaus 25 define a high energy level 27 which is the average maximal energy received by the areas of the layer 21 where the first image is projected. These plateaus are obtained where there is a micromirror.

The valleys 26 define a low energy level 28 which is the average minimal energy received by the areas of the layer 21 where the first image is projected. These valleys are obtained where there is no micromirror.

The low regions 33 define a minimum energy level 30 which is the average residual energy received by the areas of the layer 21 where the first image 17 is not projected, such an average residual energy being here considered to be zero.

Curve 61 has a high region 34 corresponding to where the second image is projected and low regions 35 corresponding to where the second image is not projected.

High region 34 is formed by a succession of plateaus 36 and valleys 37 which are respectively the effect of the micromirrors of the unit 16 and of the space between these micromirrors.

The plateaus 36 define a high energy level 38 which is the average maximal energy received by the areas of the layer 21 where the second image is projected. These plateaus are obtained where there is a micromirror.

The valleys 37 define a low energy level 39 which is the average minimal energy received by the areas of the layer 21 where the second image is projected. These plateaus are obtained where there is no micromirror.

The low regions 35 define a minimum energy level 40 which is the average residual energy received by the areas of the layer 21 where the second image 18 is not projected, such an average residual energy being here considered to be zero.

Curve 61 further has fading regions 41 that are each joining the high region 34 to the low regions 35 and corresponding to the periphery of the second image 18, where the light energy progressively diminishes.

Similar fading regions actually exist also for curve 24 but are negligible here because the contrast level of the first image 17 is much higher than the contrast level of the second image 18.

Another fact illustrating the higher contrast level of the first image 17 with respect to the one of the second image 18 is that the difference of altitude between the plateaus 25 and the valleys 26 of curve 24 is greater than the difference of altitude between the plateaus 36 and the valleys 37 of curve 61.

Taking into account the above, the contrast level of an image projected by the unit 16, for instance the first image 17 or the second image 18, can be defined by the expression: contrast_level = (high_energy_level - low_energy_level) / (high_energy_level - minimum_energy_level).

**As** mentioned above in the case of the first image and the second image, the minimum energy level is the average residual energy received by the areas of the layer 21 where the image is not projected and can be considered to be zero.

Indeed, this average residual energy is primarily a characteristic of the manufacturing system 1 and is in practice close to zero $mW/cm^2$, for instance 0.12 $mW/cm^2$. The value of this average residual energy is usually given by the manufacturer of the manufacturing system 1.

By considering the average residual energy to be equal to zero, the above expression is simplified as follows:

$$contrast\_level = (high\_energy\_level - low\_energy\_level) / (high\_energy\_level).$$

For the first image, the contrast level is thus: (level_27 - level_28) / (level_27).

For the second image, the contrast level is thus: (level_38 - level_39) / (level_38).

This difference of contrast is obtained because the second image is passed through a diffusion element before being projected onto the curable material.

**The** predetermined sharp threshold and the predetermined blurring threshold can depend on the composition and/or the intrinsic parameters of the curable material.

The predetermined blurring threshold can be obtained by additively manufacturing from the curable material a plurality of test elements that are representative of the ophthalmic lens to be manufactured, each test element being obtained with a respective and distinct contrast level and then testing each of these test elements for determining the contrast level below which the diffractive effect is acceptable (or admissible), that is to say the blurring threshold.

The test elements may be manufactured with a manufacturing system such as the system of figure 1.

Each test element may be tested by shadowgraphy, for instance using an arc-lamp for irradiating the test element and producing a shadowgraph which may be analyzed with the naked eye. The diffractive effect may be considered acceptable if it is undetectable or barely undetectable with the naked eye, or more generally when it is low enough for ophthalmic application.

Alternatively, or in addition, each test element may be tested by analyzing its transmission characteristic, such as diffraction orders produced by a laser, or transmission in UV spectroscopy.

For instance, it has been determined that for a predetermined material including acrylate and methacrylate monomers, the predetermined blurring threshold is about 3%, thereby obtaining a refractive index variation of about 0.0001.

More generally, it has been determined that for most of the curable predetermined materials, using a second contrast level which is lower than a predetermined blurring threshold of 4%, or preferably 2% leads to a cured material having an acceptable diffractive effect for obtaining non-disrupted parts.

The predetermined sharp threshold can be higher than 60% and preferably 66%.

The figure 6-a represents the first image that will be used to create, for one of the layers, the disrupted parts of the layer having the disrupted refractive index variation. The figure 6-b represents the second image that will be used to create, for the same layer, the part surrounding the disrupted parts. Both figures 6-a and 6-b are used to create layers nearly perpendicular to an axis normal to a front face of the ophthalmic lens 100 at a top point of the front face.

In a second example of the manufacturing method, the step of manufacturing the plurality of layers comprises:

- a step of curing the first area of a layer of the plurality of layers with a first image without shifting the first image during the curing, the first area being included in one of the disrupted parts 401-a and
- a step of curing the second area of the layer with a second image, by shifting the second image during the curing, the second area being different from the first area.

Generally, the shifting of the second image is done along a horizontal plane. The shifting is advantageously done for a distance depending on the size of the interspace between the micromirrors. For example, if this interspace is between 1 and 10 $\mu$m the shifting can be done for 10 to 100 $\mu$m. The shifting can be realized by moving the forming unit 3 along the horizontal plane, by moving the support 15 along the horizontal plane or by moving both the forming unit 3 and the support 15 along the horizontal plane.

In this second example, the absence of shifting of the first image allows the creation of the plurality of interfaces of the disrupted parts 401-a. The shifting of the second image allows the creation of the other part 401-b surrounding the disrupted parts 401-a, this other part 401-b having a constant homogeneous refractive index. Therefore, the second area is not included in one of the disrupted parts 401-a.

The images of the figures 6-a and 6-b can also be used in this second example. The disrupted parts 401-a are generated using the DLP projector to cure the material. As described above the DLP is composed of a DMD (micro-mirrors grid) which pixelate a light flux.

The shifting of the second image used to create the other parts 401-b will avoid the creation of the defect created when curing the disrupted part.

For the other part 401-b surrounding the disrupted parts 401-a, the blurring of the first example or the shifting of the second example is used to obtain the constant homogeneous refractive index of the other part 401-b.

The level of disrupted refractive index variation depends of different parameters:

- A type of the curable material
- A size of the pixels of the DLP projector
- A distance separating the pixels
- Curing parameters (light intensity, curing time, etc...)
- A thickness of the layers
- A stacking of voxels (The light scattering effect will depend on the size of the disrupted part. The size is driven by the size of the voxels on each layer but is also driven by the stacking of layers, for example how many layers are used to create the disrupted part).

It is also possible to use the first and second examples of the step of manufacturing a plurality of layers, when layers are created sensibly parallel to the optical path, in other words nearly parallel to an axis normal to a front face of the ophthalmic lens at a top point of the front face. In fact, "black spaces" between pixels are "propagated" into depth of the printed layers and variation of refractive index variation in Z direction (direction of illumination axis for curing) are created when scattering is created and are useful to control myopia. To realize this creation using layers sensibly parallel, the printing orientation of the ophthalmic lens is modified accordingly.

The figure 7-a represents another example of the first image that can be used to create, for one of the layers, the disrupted parts 401-a of the layer having the disrupted refractive index variation. The figure 7-b represents another example of the second image that can be used to create, for the same layer, the other part 401-b surrounding the disrupted parts 401-a. Both figures 7-a and 7-b are used to create layers nearly parallel to an axis normal to a front face of the ophthalmic lens at a top point of the front face.

In a third example, or in combination with the first and second examples, the step of manufacturing the plurality of layers comprises:

- a step of curing a first area of a first layer of the plurality of layers, by irradiating with a first curing surface energy, the first curing surface energy being higher than or equal to a solid energy threshold corresponding to an energy sufficient to cure a whole thickness of the first area,
- a step of curing a second area of the first layer, by irradiating with a second curing surface energy, the second curing surface energy being strictly lower than the solid energy threshold and higher than an induction surface energy,

after the irradiation of the first layer, the method also comprises:

- a step of curing a first area of the second layer by irradiating the surface of the curable material with the first curing surface energy, the first area of the second layer covering the first area of the first layer,
- a step of curing a second area of the second layer with at least a third curing surface energy, third curing surface energy being higher than the induction surface energy, the third curing surface energy irradiating both the second area of the second layer and at least a portion of the second area of the first layer, the sum of the second curing surface energy and the third curing surface energy received by second area of the first layer being sufficient to cure the second area of the first layer, the second area of the second layer covering the second area of the first layer.

The first area of the first layer is included in one of the disrupted parts 401-a. The first area of the second layer is included in the same disrupted part 401-a as the first area of the first layer. The second area of the first layer and the second area of the second layer correspond to the other part 401-b surrounding the disrupted parts 401-a. Therefore, the second area of the first and second layers are not included in one of the disrupted parts 401-a.

The curing steps allowing the curing of the second area of the first layer with a threshold below the solid energy threshold and having the remaining energy for polymerization being provided during the curing of later deposited layers is called herein the sub-polymerization process.

The solid energy threshold Ts can correspond to an energy sufficient to make the first area of the first layer or the first area of the second layer of the ophthalmic lens 100 solid on the whole thickness of the layer. The solid energy threshold Ts can alternatively correspond to an energy to have a sufficient "green strength", which means an energy sufficient to cure the first area of the first layer or the first area of the second layer of the ophthalmic lens 100 so that it is solid enough that it allows to handle the manufactured device but lower than an energy necessary to fully cure the material of the layer or device. The term "green" refers here to an initially formed photopolymerized ophthalmic lens as opposed to the final ophthalmic lens, which is subjected to additional thermal curing and/or UV post-curing after an additive manufacturing method. More details about this solid energy threshold Ts can be found in the article "Polymers for 3D Printing and Customized Additive Manufacturing" of Samuel Clark Ligon, Robert Liska, Jirgen Stampfl, Matthias Gurr, and Rolf MCilhaupt, published Chemical Reviews 2017 117 (15), 10212-10290, DOI: 10.1021/acs.chemrev.7b00074.

The induction surface energy Ei is the curing surface energy E above which the polymerization process starts. If the curing surface energy E is below this induction surface energy Ei the curable material remains liquid and the polymerization does not occur.

Furthermore, the solid energy threshold Ts is strictly higher than the induction surface energy Ei, for example is higher than twice the induction surface energy Ei. This solid energy threshold Ts is sufficient to obtain a part which is more solid than a part which is not polymerized yet.

As an illustrative example, one can consider that the curable material is based on acrylate monomers with experimentally determined values of critical Jacobs energy Ec of 5 mJ and light depth penetration value Dp of 200 $\mu$m is considered. In order to build layers with a thickness of 10 $\mu$m, the solid energy threshold Ts would thus be 5.26 mJ. The solid energy threshold Ts would be equal to the Jacobs energy Ej. Using the value of the previous section, the first curing energy could be equal to 6 mJ. One can also irradiate the curable material using a plurality of successive irradiations, for example 4 successive irradiations each equal to 1.66 mJ. The second and third curing energy could be equal to 3 mJ. One can also irradiate the curable material using a plurality of successive irradiations, for example 3 successive irradiations each equal to 1 mJ. This initial set of pixels is projected on the surface 55 of the curable material 50 which is above the support 15, to form an initial layer. In the first area, the curable material will be cured in a whole thickness, therefore the first area will be solid. In the second area, the curable material that is irradiated will not be in a solid state. A second layer will be deposited to cover the initial layer. The second layer will be irradiated, the first area will be cured in a whole thickness. After irradiation, the second area of the second layer will not be in a solid state. After irradiation, the second area of the initial layer will be solid because of the irradiation received during the irradiation of the initial layer and the irradiation of the second layer.

In other words, in the third example, the disrupted part 401-a is generated by using the parts of the additive manufacturing method described above that are not using sub-polymerization, i.e.: as in the 1st area described above. By polymerizing a part of a new layer until it is solid, when a further new layer is cured on said previously cured one, an interface is created with different material properties, and consequently different optical properties. Stacking these defects, due to layer-by-layer process, creates the disrupted refractive index.

The other part 401-b surrounding the disrupted parts 401-a is realized using sub-polymerisation to have a homogeneous and constant refractive index.

To obtain the curing with different energy, two different images can be used. The first one used to cure the disrupted part, will present a high light density on the parts to cure, meaning a white color or close to white. A second image will be used to cure the part surrounding the disrupted parts. The second image will present a lower light density, meaning that the part of the image used to cure, will be darker than the ones of the first image.

The first image and the second image can be applied sequentially or simultaneously, depending on features and the configuration of the manufacturing system for example a number of curing devices.

If the first and second images are applied simultaneously, they must be merged into a single image flux projected to the surface to be cured. The curing can also be realized using a single image comprising the first image and the second image using grayscale mode to modulate light dosage over the surface to be cured.

The figure 8 represents a grayscale image used to cure the curable material with an energy depending on the part to cure. The white parts of the image allow the curing of the disrupted parts 401-a and the gray parts of the images allow the curing of the other part 401-b surrounding the disrupted parts 401-a.

In the fourth example, the step of manufacturing the plurality of layers allows forming:

- a front side of the ophthalmic lens 100,
- a back side of the ophthalmic lens 100,
- a lateral side of the ophthalmic lens 100 and
- a plurality of protuberance extended from the front side, the back side or the lateral side and in direction of one of the other sides,

The method also comprises:

- a step of filing an internal part of the ophthalmic lens 100 with the curable material and
- a step of polymerizing the curable material filled in the internal part of the ophthalmic lens.

In other words, using the fourth example the forming of the front side, the back side and the lateral side allows forming a skin of the ophthalmic lens 100. Furthermore, a plurality of protuberances is created generally simultaneously to the creation of the sides of the ophthalmic lens. The protuberances present a disrupted refractive index; therefore, they must be created using a method allowing obtaining of this disrupted refractive index. The sides are generally with a homogeneous constant refractive index. To obtain the protuberances with the disrupted refractive index and the side with the homogeneous constant refractive index, the first, second and third embodiment described above can be used.

The figure 9 represents a cross section of the ophthalmic lens 100. 901 is one of the protuberances. 902 is a part with a constant and homogeneous refractive index. 903-a is the back side, 903-b is the lateral side and 903-c is the front side.

Generally, the first, second, third and fourth examples of the step of manufacturing a plurality of layers are used with the manufacturing system represented in figure 1 and adapted to manufacture the ophthalmic lens 100 by way of a DLP-SLA process.

In a fifth example the step of manufacturing the plurality of layers comprises:

- a step of jetting a discontinuous layer of the curable material on a first area of a layer of the plurality of layers,
- a step of jetting a continuous layer of the curable material on a second area of the layer,
- a step of curing the first discontinuous layer and the first continuous layer,

The first area is included in one of the disrupted parts 401-a.

The method also comprises after the first discontinuous layer and the first continuous layer have been cured:

- a step of jetting a second discontinuous layer of the curable material on a first area of a second layer of the plurality of layers, the first area of the second layer covering the first area of the first layer,
- a step of jetting a second continuous layer of the curable material on a second area of the second layer, the second area of the second layer covering the second area of the first layer,
- a step of curing the second discontinuous layer and the second continuous layer.

The first area of the second layer is included in the same disrupted part 401-a as the one of the first area of the first layer.

The second area of the first layer and the second area of the second layer are included in the other part 401-b surrounding the disrupted parts 401-a. Therefore, the second area is not included in one of the disrupted parts 401-a.

A discontinuous layer of curable material is for example a layer on which less than 50%, advantageously less than 30%, even more advantageously less than 10% is covered by curable material.

A continuous layer of curable material is for example a layer on which more than 70%, advantageously more than 80%, even more advantageously more than 90% is covered by curable material.

Generally, the fifth example of the step of manufacturing a plurality of layers is used with the manufacturing system represented in figure 2 and adapted to manufacture an ophthalmic lens by polymer jetting.

In other words, in this fifth example the disrupted parts 401-a are manufactured by dispensing the curable material (for example using the print-head 206) by a "multi-pass process". A multi-pass process consists of dispensing a volume of material into multiple steps and cure the material after each dispensing step. Defects are created, resulting in light scattering, which is useful to control myopia. In the case of the regular "multi-pass process", only continuous layers of material are jetted. However, in the case of the fifth example, discontinuous layers of material are also jetted.

During the printing process, the dispensing unit provides curable material 50 locally, but forming the discontinuous layer. The dispensed material is cured, then the dispensing unit provides a second pass of additional material forming another discontinuous layer. The material dispensed is cured etc... until the expected level of light scattering is achieved and/or layer completed. This method produces a "matte effect" causing light scattering.

If the curing unit 203 is a non-imaging device (for example a conventional LED) passing above the layer (for example in the case of ink jet technology), the light emitted is the same for the whole layer.

The figure 10-a and 10-b represents two examples of the discontinuous layer used to manufacture the disrupted part of the ophthalmic lens 100.

## Claims

1. A method for additively manufacturing an ophthalmic lens (100),

   the manufacturing method comprising:

   - creating (301) at least one disrupted part (401-a), the at least one disrupted part (401-a) having a disrupted refractive index variation,

   the at least one disrupted part (401-a) being smaller than 1 mm$^3$,
   the at least one disrupted part (401-a) being located in a depth of the ophthalmic lens (100) or on a surface of the ophthalmic lens (100).

2. The method according to the claim 1, also comprising:

   - manufacturing a plurality of layers of a curable material to create the at least one disrupted part (401-a).

3. The method according to the claim 2,
   the layers of the plurality of layers being nearly perpendicular or parallel to an axis normal to a front face of the ophthalmic lens (100) at a top point of the front face.

4. The method according to the claim 2 or 3, also comprising:

   - curing a first area of a layer of the plurality of layers with a first image having a first contrast level, the first area being comprised in the at least one disrupted part (401-a) and
- curing a second area of the layer with a second image having a second contrast level, the second area being different from the first area,

the first contrast level being higher than a predetermined sharp threshold and the second contrast level being lower than a predetermined blurring threshold.

5. The method according to the claim 2 or 3 also comprising:

   - curing a first area of a layer of the plurality of layers with a first image without shifting the first image during the curing, the first area being included in the at least one disrupted part (401-a) and
   - curing a second area of the layer with a second image, by shifting the second image during the curing, the second area being different from the first area.

6. The method according to any one of the claims 2 to 5 also comprising:

   - curing a first area of a first layer of the plurality of layers, by irradiating with a first curing surface energy, the first curing surface energy being higher than or equal to a solid energy threshold corresponding to an energy sufficient to cure a whole thickness of the first area,
   - curing a second area of the first layer, by irradiating with a second curing surface energy, the second curing surface energy being strictly lower than the solid energy threshold and higher than an induction surface energy,

   after the irradiation of the first layer, the method also comprising:

   - curing a first area of the second layer by irradiating the surface of the curable material with the first curing surface energy, the first area of the second layer covering the first area of the first layer
   - curing a second area of the second layer with at least a third curing surface energy, third curing surface energy being higher than the induction surface energy, the third curing surface energy irradiating both the second area of the second layer and at least a portion of the second area of the first layer, the sum of the second curing surface energy and the third curing surface energy received by second area of the first layer being sufficient to cure the second area of the first layer, the second area of the second layer covering the second area of the first layer,

   the first area of the first layer being included in the at least one disrupted part (401-a),
   the first area of the second layer being included in the at least one disrupted part (401-a).

7. The method, according to the claim 2 or 3, comprising:

   - jetting a discontinuous layer of the curable material on a first area of a layer of the plurality of layers,
   - jetting a continuous layer of the curable material on a second area of the layer,
   - curing the first discontinuous layer and the first continuous layer,

   the first area being included in the at least one disrupted part (401-a).

8. The method, according to the claim 7,

   the layer being a first layer,
   the discontinuous layer being a first discontinuous layer,
   the continuous layer being a first continuous layer,
   the method also comprising when the first discontinuous layer and the first continuous layer are cured:

   - jetting a second discontinuous layer of the curable material on a first area of a second layer of the plurality of layers, the first area of the second layer covering the first area of the first layer,
   - jetting a second continuous layer of the curable material on a second area of the second layer, the second area of the second layer covering the second area of the first layer,
   - curing the second discontinuous layer and the second continuous layer,

   the first area of the second layer being included in the at least one disrupted part (401-a).

9. The method according to the claim 2 or 3,

   manufacturing the plurality of layers allowing forming:

   - a front side (903-c) of the ophthalmic lens (100),
   - a back side (903-a) of the ophthalmic lens (100),
   - a lateral side (903-b) of the ophthalmic lens (100) and
   - at least one protuberance (901) extended from the front side (903-c), the back side (903-a) or the lateral side (903-b) and in direction of one of the other sides,

   the method also comprising:

   - filing an internal part (902) of the ophthalmic lens (100) with the curable material and
   - polymerizing the curable material filled in the internal part (901) of the ophthalmic lens (100).

10. A manufacturing system (1; 201) configured to additively manufacturing an ophthalmic lens (100),

   the manufacturing system (1;201) being configured:

   - to create at least one disrupted part (401-a), the at least one disrupted part (401-a) having a disrupted refractive index variation,

   the at least one disrupted part (401-a) being smaller than 1 mm$^3$,
   the at least one disrupted part (401-a) being located in a depth of the ophthalmic lens (100) or on a surface of the ophthalmic lens (100).

11. The manufacturing system (1; 201) according to the claim 10, being also configured to manufacture a plurality of layers of a curable material to create the at least one disrupted part (401-a).

12. The manufacturing system (1; 201) according to the claim 11, being also configured:

   - to cure a first area of a layer of the plurality of layers with a first image having a first contrast level, the first area being comprised in the at least one disrupted part (401-a) and
   - to cure a second area of the layer with a second image having a second contrast level, the second area being different from the first area,

   the first contrast level being lower than a predetermined blurring threshold and the second contrast level being higher than a predetermined sharp threshold.

13. The manufacturing system (1; 201) according to the claim 11, being also configured:

   - to cure a first area of a layer of the plurality of layers with a first image without shifting the first image during the curing, the first area being included in the at least one disrupted part (401-a) and
   - to cure a second area of the layer with a second image, by shifting the second image during the curing, the second area being different from the first area.

14. The manufacturing system (1; 201) according to the claim 11, being also configured:

   - to cure a first area of a first layer of the plurality of layers, by irradiating with a first curing surface energy, the first curing surface energy being higher than or equal to a solid energy threshold corresponding to an energy sufficient to cure a whole thickness of the first area,
   - to cure a second area of the first layer, by irradiating with a second curing surface energy, the second curing surface energy being strictly lower than the solid energy threshold and higher than an induction surface energy,

   after the irradiation of the first layer, the method also comprising:

   - to cure a first area of the second layer by irradiating the surface of the curable material with the first curing surface energy, the first area of the second layer covering the first area of the first layer

- to cure a second area of the second layer with at least a third curing surface energy, third curing surface energy being higher than the induction surface energy, the third curing surface energy irradiating both the second area of the second layer and at least a portion of the second area of the first layer, the sum of the second curing surface energy and the third curing surface energy received by second area of the first layer being sufficient to cure the second area of the first layer, the second area of the second layer covering the second area of the first layer,

the first area of the first layer being included in the at least one disrupted part (401-a),
the first area of the second layer being included in the at least one disrupted part (401-a).

15. The manufacturing system (1; 201) according to the claim 11, being also configured:

- to jet a first discontinuous layer of the curable material on a first area of a first layer of the plurality of layers,
- to jet a first continuous layer of the curable material on a second area of the first layer,
- to cure the first discontinuous layer and the first continuous layer,

the first area of the first layer being included in the at least one disrupted part (401-a),
the manufacturing system (1; 201) being also configured, when the first discontinuous layer and the first continuous layer are cured:

- to jet a second discontinuous layer of the curable material on a first area of the second layer, the first area of the second layer covering the first area of the first layer,
- to jet a second continuous layer of the curable material on a second area of the second layer, the second area of the second layer covering the second area of the first layer,
- to cure the second discontinuous layer and the second continuous layer,

the first area of the second layer being included in the at least one disrupted part (401-a).

[Fig. 1]

[Fig. 2]

[Fig. 3]

301

302

[Fig. 4]

401-a

100

401-b

[Fig. 5]

[Fig. 6]

FIG. 6-a        FIG. 6-b

[Fig. 7]

FIG. 7-a        FIG. 7-b

[Fig. 8]

[Fig. 9]

[Fig. 10]

FIG. 10-a

FIG. 10-b

Europäisches
Patentamt

European
Patent Office

Office européen
des brevets

## EUROPEAN SEARCH REPORT

Application Number

EP 22 30 6010

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2015/253585 A1 (ANATOLE VINCENT [FR] ET AL) 10 September 2015 (2015-09-10)<br>* abstract *<br>* figures 1-8 *<br>* paragraphs [0025] - [0036], [0052], [0085], [0086] * | 1-3,7-9, 11-15<br>4-6 | INV.<br>B29D11/00<br>B29C64/112<br>B33Y10/00<br>B33Y30/00 |
| X<br>A | US 10 571 717 B2 (UNIV WASHINGTON [US]) 25 February 2020 (2020-02-25)<br>* abstract *<br>* figures 1A-15B *<br>* column 11, lines 50-55 *<br>* column 6, line 50 - column 7, line 3 * | 1,10-15<br>2-9 | |
| X<br>A | WO 2022/074243 A1 (ESSILOR INT [FR]) 14 April 2022 (2022-04-14)<br>* abstract *<br>* figures 1-6 * | 10-15<br>1-9 | |
| A | US 2022/134638 A1 (VERHEYEN TOM [NL]) 5 May 2022 (2022-05-05)<br>* abstract *<br>* figures 1-2b *<br>* paragraph [0033] * | 1-15 | TECHNICAL FIELDS SEARCHED (IPC)<br><br>B29D<br>B29C<br>B33Y |

The present search report has been drawn up for all claims

| Place of search | Date of completion of the search | Examiner |
|---|---|---|
| The Hague | 15 December 2022 | Heckmann, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6010

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2022

| Patent document cited in search report | | | Publication date | Patent family member(s) | | | Publication date |
|---|---|---|---|---|---|---|---|
| US 2015253585 | A1 | | 10-09-2015 | AU | 2013322436 | A1 | 07-05-2015 |
| | | | | BR | 112015005239 | A2 | 04-07-2017 |
| | | | | CA | 2884801 | A1 | 03-04-2014 |
| | | | | CN | 104684716 | A | 03-06-2015 |
| | | | | CN | 110077019 | A | 02-08-2019 |
| | | | | EP | 2900461 | A1 | 05-08-2015 |
| | | | | FR | 2996160 | A1 | 04-04-2014 |
| | | | | JP | 6560982 | B2 | 14-08-2019 |
| | | | | JP | 2015530621 | A | 15-10-2015 |
| | | | | KR | 20150060745 | A | 03-06-2015 |
| | | | | MA | 20150245 | A1 | 31-07-2015 |
| | | | | TN | 2015000094 | A1 | 29-06-2016 |
| | | | | US | 2015253585 | A1 | 10-09-2015 |
| | | | | WO | 2014049284 | A1 | 03-04-2014 |
| | | | | ZA | 201502848 | B | 30-11-2016 |
| US 10571717 | B2 | | 25-02-2020 | AU | 2017306044 | A1 | 28-02-2019 |
| | | | | AU | 2022206686 | A1 | 11-08-2022 |
| | | | | CA | 3032668 | A1 | 08-02-2018 |
| | | | | CN | 109716212 | A | 03-05-2019 |
| | | | | CN | 115185103 | A | 14-10-2022 |
| | | | | EP | 3491456 | A1 | 05-06-2019 |
| | | | | JP | 7032813 | B2 | 09-03-2022 |
| | | | | JP | 2019529968 | A | 17-10-2019 |
| | | | | JP | 2022068287 | A | 09-05-2022 |
| | | | | KR | 20190053840 | A | 20-05-2019 |
| | | | | PH | 12019500228 | A1 | 21-10-2019 |
| | | | | SG | 10202102156Y | A | 29-04-2021 |
| | | | | SG | 11201900867U | A | 27-02-2019 |
| | | | | TW | 201812392 | A | 01-04-2018 |
| | | | | US | 2019033619 | A1 | 31-01-2019 |
| | | | | US | 2020271955 | A1 | 27-08-2020 |
| | | | | WO | 2018026697 | A1 | 08-02-2018 |
| WO 2022074243 | A1 | | 14-04-2022 | NONE | | | |
| US 2022134638 | A1 | | 05-05-2022 | EP | 3927531 | A1 | 29-12-2021 |
| | | | | KR | 20210127233 | A | 21-10-2021 |
| | | | | US | 2022134638 | A1 | 05-05-2022 |
| | | | | WO | 2020169692 | A1 | 27-08-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PAUL F. JACOBS.** Fundamentals of stereolithography. *International Solid Freeform Fabrication Symposium,* 1992
- **TUNICK.** *Calculating the Microstructure of Atmospheric Optical Turbulence,* 1998, https://apps.dtic.mil/sti/pdfs/ADA358511.pdf
- **CHEON MUSCHINSKI.** *Closed-form approximations for the angle-of-arrival variance of plane and spherical waves propagating through homogeneous and isotropic turbulence,* 2007

- **VOELZ XIAO.** *Computer simulations of optical turbulence in the weak- and strong scattering regime angle-of-arrival fluctuations obtained from ray optics and wave optics,* 2018, https://doi.org/10.1117/1.OE.57.10.104102
- **SAMUEL CLARK LIGON ; ROBERT LISKA ; JIRGEN STAMPFL ; MATTHIAS GURR ; ROLF MCILHAUPT.** Polymers for 3D Printing and Customized Additive Manufacturing. *Chemical Reviews,* 2017, vol. 117 (15), 10212-10290